# EUROPEAN PATENT APPLICATION

(11) **EP 4 428 718 A1**
(43) Date of publication of application: **11.09.2024**
(21) Application number: 22903311.3
(22) Date of filing: 01.12.2022
(51) Int. Cl.: G06F 16/957

(54) **VIDEO PROCESSING METHOD AND APPARATUS, ELECTRONIC DEVICE, AND STORAGE MEDIUM**

(30) Priority: 08.12.2021 CN 202111493846
(71) Applicant: BEIJING BYTEDANCE NETWORK TECHNOLOGY CO., LTD., Beijing 100041 (CN)
(72) Inventor: ZHAO, Dong, Beijing 100086 (CN); ZHONG, Qiu, Beijing 100086 (CN)
(74) Representative: Dentons UK and Middle East LLP
(86) International application number: PCT/CN2022/136020
(87) International publication number: WO 2023/103889

(57) **Abstract**

Embodiments of the present disclosure disclose a video processing method and apparatus, an electronic device, and a storage medium. The method comprises: upon detecting that a video stream comprises a target video, issuing resource configuration information associated with the target video, wherein the resource configuration information comprises multimedia data corresponding to the target video, and an association relationship between the target video and at least one video to be played that is associated with the target video; upon detecting that playback of the target video is triggered, jumping to a video playback page corresponding to the target video, and determining, according to the association relationship, at least one video to be played that is associated with the target video; and loading multimedia data of said at least one video, and updating, according to a trigger operation on said at least one video, the target video displayed on the video playback page

## Description

### CROSS-REFERENCE TO RELATED APPLICATION

This application claims the priority of Chinese Patent Application No. 202111493846.X filed in the China Patent Office on December 8, 2021, the entire contents of which are incorporated into this application by reference.

### TECHNICAL FIELD

The embodiments of the present disclosure relate to computer technologies, for example, a video processing method, a video processing apparatus, an electronic device and a storage medium.

### BACKGROUND

With the popularity of smart terminals, more and more users browse corresponding video contents through the smart terminal. When playing an interactive video based on a traditional H5 page, it needs to wait for a long time to load the video. Meanwhile, in a playing process of the interactive video, loading can be performed only after the playback of the video is completed, and the waiting time is long, resulting in the problem of poor user experience.

### SUMMARY

The present disclosure provides a video processing method, a video processing apparatus, an electronic device and a storage medium. The video processing method are used for preloading the video to be played, so that when the video to be played is played, there is no need to wait for a long time, thereby improving the viewing efficiency of users and further improving the video conversion rate.

At a first aspect, at least one embodiment of the present disclosure provides a video processing method. The method includes:
issuing resource configuration information associated with a target video in response to detecting that a video stream includes the target video, wherein the resource configuration information includes multimedia data corresponding to the target video and an association relationship between the target video and at least one to-be-played video associated with the target video;
jumping to a video playback page corresponding to the target video in response to detecting that the target video is triggered to play, and determining, according to the association relationship, the at least one to-be-played video associated with the target video; and
loading multimedia data of the at least one to-be-played video, and updating, according to a triggering operation on the at least one to-be-played video, the target video displayed on the video playback page.

At a second aspect, at least one embodiment of the present disclosure provides a video processing apparatus. The apparatus includes:
a resource configuration information issuing module, configured to issue resource configuration information associated with a target video in response to detecting that a video stream includes the target video, wherein the resource configuration information includes multimedia data corresponding to the target video and an association relationship between the target video and at least one to-be-played video associated with the target video;
a to-be-played video determination module, configured to jump to a video playback page corresponding to the target video in response to detecting that a playback of the target video is triggered, and determine, according to the association relationship, the at least one to-be-played video associated with the target video; and
a video preloading module, configured to load multimedia data of the at least one to-be-played video, and update, according to a triggering operation on the at least one to-be-played video, the target video displayed on the video playback page.

At a third aspect, at least one embodiment of the present disclosure provides an electronic device. The electronic device includes:
one or more processors; and
a storage apparatus configured to store one or more programs,
the one or more programs, when executed by the one or more processors, causing the one or more processors to implement the video processing method according to any one of embodiments of the present disclosure.

At a fourth aspect, at least one embodiment of the present disclosure provides a storage medium including computer-executable instructions. The computer-executable instructions, when executed by a computer processor, configured to perform the video processing method according to any one of embodiments of the present disclosure.

### BRIEF DESCRIPTION OF DRAWINGS

Throughout the drawings, the same or similar reference numbers refer to the same or similar elements. It should be understood that the drawings are schematic and that components and elements are not necessarily drawn to scale.
Fig. 1 is a flow diagram of a video processing method provided by an embodiment of the present disclosure;
Fig. 2 is a schematic diagram of resource configuration information provided by an embodiment of the present disclosure;
Fig. 3 is a flow diagram of a video processing method provided by another embodiment of the present disclosure;
Fig. 4 is a structural schematic diagram of a video processing apparatus provided by an embodiment of the present disclosure;
Fig. 5 is a structural schematic diagram of an electronic device provided by an embodiment of the present disclosure.

### DETAILED DESCRIPTION

It should be understood that the steps described in the method embodiments of the present disclosure may be performed in a different order and/or in parallel. Furthermore, the method embodiments may include additional steps and/or omit performing the illustrated steps. The scope of the present disclosure is not limited in this respect.

As used herein, the term "comprising" and its variants are inclusive, that is, "including but not limited to". The term "based on" means "at least partially based on". The term "one embodiment" means "at least one embodiment"; the term "another embodiment" means "at least one other embodiment"; and the term "some embodiments" means "at least some embodiments". Related definitions of other terms will be given in the following description.

It is noted that the terms "first", "second", and the like in the present disclosure are only used for distinguishing different apparatuses, modules or units, and are not used for limiting the order or interdependence of the functions performed by these apparatuses, modules or units. It is noted that references to "a" or "an" or "a plurality of" in the present disclosure are intended to be illustrative rather than limiting, and should be understood as "one or more" by those skilled in the art, unless the context clearly indicates otherwise.

The names of messages or information exchanged between apparatuses in the embodiments of the present disclosure are for illustrative purposes only, and are not intended to limit the scope of the messages or information.

Before the technical solution is introduced, an application scenario may be exemplarily described. The technical solution may be applied to a video playing scenario based on an H5 page. For example, a to-be-played video made by a third party is integrated into a certain application program. For example, the to-be-played video may be an advertisement to be inserted by the third party, and when playing the to-be-played video, it is necessary to jump to a video playback page to play the to-be-played video based on H5. When a current player of current application software jumps to the H5 page for video playing, it is necessary to load data corresponding to the to-be-played video, so that a user needs to wait for a lengthened duration to enjoy the duration to be played. Within the duration of waiting, the user may possibly exit the video playback page, resulting in poor user experience and low conversion rate of the to-be-played video. Therefore, shortening the corresponding waiting time has become an urgent problem to be solved. It should also be noted that most of the videos in the video playing software in related arts are native videos, that is, videos played based on native players, and accordingly, videos which jump to be played on other video playback pages are regarded as H5 videos.

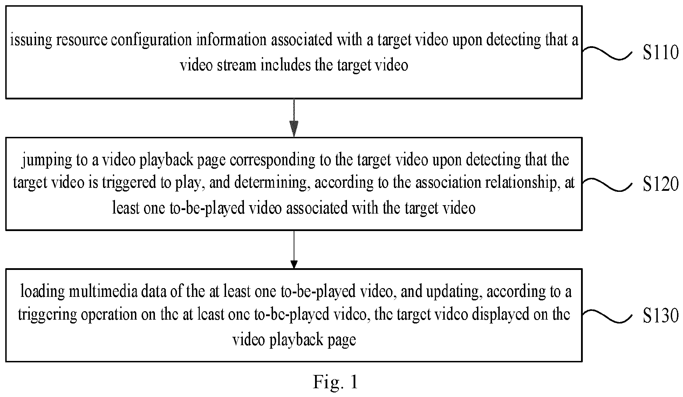

Fig. 1 is a flow diagram of a video processing method provided by an embodiment of the present disclosure. The embodiment of the present disclosure is suitable for inserting a video playing scenario based on the H5 page into the video playing software supported by the Internet. The method may be implemented by a video processing apparatus, which may be implemented in a form of software and/or hardware, for example, by an electronic device which may be a mobile terminal, a PC terminal or a server. The video processing method provided by the embodiment of the present disclosure may be executed by a server side, or by a client side, or by cooperation between the client side and the server side.

As shown in Fig. 1, the method includes:
S110: issuing resource configuration information associated with a target video upon detecting that a video stream includes the target video.

The video processing method provided by the embodiment of the present disclosure may be integrated into any video playing software. Upon detecting that the playback of the video playing software is triggered, the home page may be entered, in which a plurality of video streams may be displayed. The plurality of video streams include a native video stream. The native video stream may be understood as a video recorded by a user who uploaded the video based on the video playing software. The plurality of video streams displayed in the home page may include the native video stream, and may also include the first-screen page or link of a video stream played based on the H5 page. The video stream played based on the H5 page is taken as the target video. That is, the target video may be a video inserted into the playing software by a third-party platform, and the video is played based on the H5 page.

Usually, the target videos are mostly advertisement videos, business promotion videos, etc. The resource configuration information is configuration information associated with the target video. For example, the resource configuration information includes multimedia data of the target video and association information between the target video and at least one to-be-played video associated with the target video.

It should be noted that the to-be-played video is also a video played based on the H5 page. After the playback of the target video is completed, a video to be played after the playback of the target video is completed may be regarded as the to-be-played video.

In at least one embodiment of the present disclosure, the target video may be an interactive video and/or a non-interactive video. The interactive video may be understood as a video where a corresponding video jumping control may pop up on a display interface to determine which video to jump to according to a triggering operation of the user. When the user does not trigger the video jumping control, no video jumping is performed.

It can be understood that if the target video is the interactive video, at least two video jumping controls may be displayed on the video playback page corresponding to the target video. Each video jumping control corresponds to one to-be-played video, and the to-be-played video to be jumped is determined based on a triggering operation of the user on the video jumping control. That is, the number of to-be-played videos associated with the target video is matched with the number of the video jumping controls.

For example, the target video may be integrated into the video playing software, and the target video may be an integrated advertisement video, which is played based on the H5 page. When the user triggers the video playing software, the user may enter the home page of the video playing software where the plurality of video streams may be displayed, and the plurality of video streams may or may not include the target video. If the plurality of video streams includes the target video, it means that the user may possibly trigger the target video. In order to avoid a situation that the user needs to wait for a long time when triggering the target video to enter the H5 page, upon detecting that the video stream includes the target video, the multimedia data of the target video and the association relationship between the target video and at least one to-be-played video associated with the target video may be issued, thereby preloading, based on the association relationship, the video possibly to be played after the target video.

In this embodiment, issuing resource configuration information associated with a target video upon detecting that a video stream includes the target video, may include: issuing the resource configuration information associated with the target video upon detecting that the video stream displayed on a current display page includes the target video; and/or, issuing the resource configuration information associated with the target video upon detecting that a to-be-displayed video stream includes the target video.

After entering the home page of the video playing software, updating the plurality of video streams displayed on the home page based on a sliding operation of the user on the home page. A page displayed by a current terminal device is taken as a current display page, which may be the home page. Accordingly, the current display page may include a plurality of video streams, and the plurality of video streams may include the target video. If the user has finished browsing the video stream displayed on the current page or the user is not interested in the video stream displayed on the current page, the user may refresh the current page. After the page is refreshed, the video stream to be displayed on the current display page is taken as the to-be-displayed video stream. The to-be-displayed video stream may also include the target video.

It can be understood that if the plurality of video streams on the current display page include the target video, or the plurality of to-be-displayed video streams after the page is refreshed include the target video, resource configuration information corresponding to the target video may be issued.

It should be noted that the resource configuration information is mainly issued by a resource configuration platform; for example, the configuration information associated with the target video may be stored in a resource issuing platform, and the resource issuing platform may issue the resource configuration information of the target video upon detecting that the video stream includes the target video.

It should also be noted that the number of target videos may be one or plural, and the specific number corresponds to an actual service. If a plurality of target videos are provided, the resource configuration information of the plurality of target videos may be correspondingly stored in the resource issuing platform. For example, establishing the correspondence between the target video and the corresponding resource configuration information, so that upon detecting that the plurality of video streams includes a certain target video, the corresponding resource configuration information may be determined from the correspondence and issued according to the identification of the target video.

On the basis of the above technical solution, it should be further noted that the resource configuration information includes not only multimedia data corresponding to the target video, but also material files of video frames in the target video, for example, the material files may be video jumping controls displayed on the video frame.

S120: jumping to a video playback page corresponding to the target video upon detecting that the target video is triggered to play, and determining, according to the association relationship, at least one to-be-played video associated with the target video.

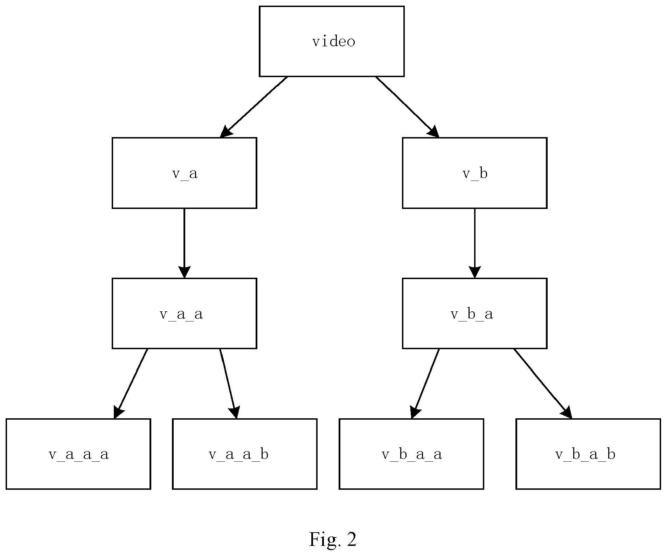

Usually, when the user browses the plurality of video streams displayed on the playback software, if the user is interested in one of the video streams, the user may trigger it to play. Certainly, if the user is interested in the target video, the user may also trigger the target video to play. The video playback page may be a page displaying a target video, for example, an H5 page. That is, the target video is a video meeting a preset type, the target video may be a video whose resource configuration information is stored in the resource issuing platform. Other video streams are mostly native videos, and the target videos are mostly H5 videos. The association relationship includes at least one to-be-played video associated with the target video. For example, the association relationship may be as shown in Fig. 2, the target video may be the "video" in Fig. 2, and the number of at least one to-be-played video at a next level that is associated with the target video is two, and the two videos are v_a and v_b respectively. The number of at least one to-be-played video associated with v_a is one, and the video is v_a_a; the number of at least one to-be-played video associated with v_b is one, and the video is v_b_a; the number of the to-be-played video associated with v_a_a may be two, and the two videos are v_a_a_a and v_a_a_b respectively; and the number of the to-be-played video associated with v_b_a may be two, and the two videos are v_b_a_a and v_b_a_b respectively. Certainly, Fig. 2 is merely a schematic diagram of the association relationship, not an exhaustive diagram of the association relationship.

In a practical application, whether the user triggers the target video may be detected in real time or at intervals. If the user triggers the target video, jumping to the video playback page corresponding to the target video. Meanwhile, at least one to-be-played video associated with the target video may be determined according to the association relationship in the resource configuration information issued in advance by the resource issuing platform.

That is, jumping to a video playback page corresponding to the target video upon detecting that the playback of the target video is triggered, may include: jumping to a video playback page displaying multimedia data stream corresponding to the target video upon detecting that a corresponding control for playing the target video is triggered, so as to play the target video on the video playback page.

In a practical application, if the user is interested in the target video, the user may trigger a control to play the target video, for example, click the target video, then the page may jump to the video playback page that displays the target video. The multimedia data stream corresponding to the target video may be played in the video playback page.

It should be noted that, as can be known based on S110, the resource issuing platform may issue the resource configuration information corresponding to the target video upon detecting that the video stream includes the target video, and the resource configuration information includes multimedia data of the target video. Therefore, when the user triggers to play the target video, the resource configuration information corresponding to the target video may have been issued, and correspondingly, there is no need to wait for a long waiting time when playing the video, thus improving the user experience.

It should also be noted that in specific applications, the timing when the user triggers the target video is uncertain, and therefore, when the target video is triggered, the resource configuration information corresponding to the target video may or may not be issued completely; at this time, the target video may be played if running configuration and resource configuration information corresponding to the target video have been issued completely.

Usually, issuing the resource configuration information of the target video when the page includes the target video, that is, when the target video is triggered, the page may directly enter the video playback page corresponding to the target video.

It should also be noted that, because the target video is played on the H5 page, before playing the target video, it is necessary to load a data packet supporting video playing, for example, the data packet may be a toolkit running on the H5 page. If the loading of the data packet is completed and the resource configuration information has been issued completely, the target video may be played on the video playback page.

S 130: loading multimedia data of the at least one to-be-played video, and updating, according to a triggering operation on the at least one to-be-played video, the target video displayed on the video playback page.

The multimedia data corresponds to the to-be-played video.

It can be understood that after determining the to-be-played video, multimedia data corresponding to at least one to-be-played video may be preloaded, so that when playing the to-be-played video, there is no need to wait for a long loading time.

For example, after determining at least one to-be-played video associated with the target video according to the association relationship, the multimedia data of the to-be-played video may be preloaded, and the user may trigger the corresponding to-be-played video and determine, according to the triggering operation of the user, which multimedia data of the video to be played needs to be continuously loaded and which multimedia data of the video to be played does not need to be loaded.

On the basis of the above technical solution, in order to avoid the situation that a bandwidth is occupied when preloading videos, it is possible to load only at least one to-be-played video at the next level directly associated with the target video.

On the basis of the above technical solution, the loading multimedia data of the at least one to-be-played video includes: preloading the multimedia data of the at least one to-be-played video when the loading of the target video is completed; or, loading the target video and the multimedia data of the at least one to-be-played video in parallel after the target video is loaded to a preset number of frames.

In order to ensure that the multimedia data of the target video is complete, that is, the user will not undergo a video lag when watching the target video, the multimedia data of at least one to-be-played video associated with the target video may be loaded after the loading of multimedia data of the target video is completed. Certainly, it is also possible to load the target video and the multimedia data of the at least one to-be-played video in parallel after detecting that the target video is loaded to a preset number of frames or loaded to a preset length according to a video playing length of the target video, under the condition that a terminal performance (which, for example, may be a processor performance) or a network parameter (which, for example, may be a network speed) is relatively good. This not only ensures that no video lag occurs in a playing process of the target video, but also ensures that under the condition that the user wants to watch other to-be-played video when the target video has not been watched completely, the other to-be-played video is preloaded with a certain number of frames, thus avoiding a situation of waiting for a long time.

It should be noted that if the page jumps from a page with a plurality of video streams to a target playing page, that is, if the target video is a first-screen video, most of the multimedia data corresponding to the target video has been loaded completely. If a certain control in the target video is triggered to jump to a certain to-be-played video, this certain to-be-played video may be taken as the target video; at this time, the multimedia data corresponding to the target video may be have been loaded or unloaded completely, and the to-be-played video associated with the target video may be loaded with multimedia data in the above manner.

In a practical application, there are two to-be-played videos associated with the target video, and the user may trigger either of the to-be-played videos to display, so that if all the multimedia data corresponding to the two to-be-played videos are loaded, there will be a waste of resources. In order to avoid this situation, the method may include: loading multimedia data of at least one to-be-played video clip or a preset number of frames in the at least one to-be-played video.

One to-be-played video may be composed of a plurality of to-be-played video clips. The to-be-played video is composed of a plurality of video frames. The preset frame number is the preset number of preloaded video frames. At least one to-be-played video clip may be one clip or two clips. Certainly, it may also be the plurality of video clips, and it may be one video clip to save resources.

For example, in the playing process of the target video, for at least one to-be-played video associated with the target video, one video clip in each to-be-played video may be loaded. Certainly, it is also possible to load all multimedia data of the to-be-played video. Upon detecting that the user triggers the control corresponding to one of the to-be-played videos, it is not necessary to load data of the other to-be-played video.

On the basis of the above technical solution, it should also be noted that, in order to avoid occupying memory, the multimedia data of all the to-be-played videos which are loaded but not played, can be cleared.

In this embodiment, the updating, according to a triggering operation on the at least one to-be-played video, the target video displayed on the video playback page includes: displaying, on the video playback page, a video jumping control corresponding to the at least one to-be-played video, and determining, according to a triggering operation on the video jumping control, a target to-be-played video from the at least one to-be-played video; and updating the target video on the video playback page based on the target to-be-played video, and taking the target to-be-played video as a updated target video, repeatedly determining, according to the association relationship, at least one to-be-played video associated with the updated target video, and loading multimedia data of the at least one to-be-played video associated with the updated target video.

According to the technical solution of the embodiment of the present disclosure, upon detecting that the plurality of video streams in the current display page includes the target video, issuing the resource configuration information corresponding to the target video, determining the to-be-played video associated with the target video based on the resource configuration information, and preloading the to-be-played video, so that when the to-be-played video is detected, the to-be-played video may be played directly, and a situation that the user exits the video playing interface because the user needs to wait for a long video loading time and a low video conversion efficiency is further caused is avoided. Because the to-be-played video is preloaded in advance according to the association relationship in the resource configuration information, when the user triggers to play the to-be-played video, the user needs to wait for a short time, which improves the video playing efficiency and further improves the video conversion rate.

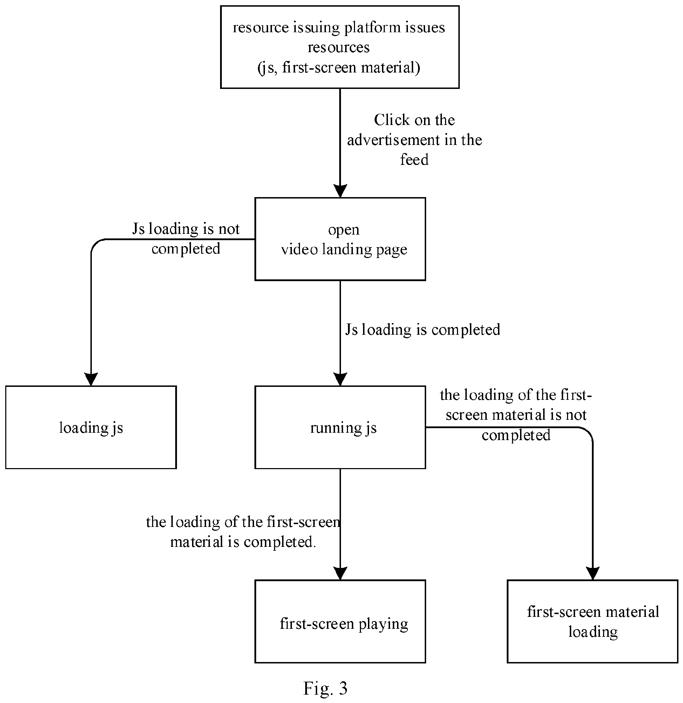

As an example of the above embodiment, Fig. 3 is a flow diagram of a video processing method provided by another embodiment of the present disclosure. On the basis of the foregoing embodiment, the technical solution can be introduced by taking specific examples as examples.

With reference to Fig. 3, upon detecting that the current display page includes the target video or the video stream in a page to be displayed includes the target video, a resource configuration file corresponding to the target video may be issued based on the resource issuing platform, for example, the resource issuing platform sends the resource configuration file corresponding to the target video to the client side that plays the target video. The target video at this time may be taken as the first-screen video. It can be understood that a feed stream of the current display page includes the target video (an advertisement video inserted by a third party), and when the user clicks on the target video, jumping to the video playback page where the target video is played, that is, the video landing page is opened. In order to play the target video on the video playback page, the data packet supporting video playing may be preloaded. For example, it is first determined whether the loading of js (data packet) is completed, and if not, js may be loaded; if the loading of js is completed, running j s and judging whether the issuing of the resource configuration file is completed, and if so, the target video may be played in the video playback page.

The resource configuration file includes project branches (that is, the video association relationship). According to the association relationship, the tree diagram of a plurality of to-be-played videos associated with the target video may be determined. Each node in the tree diagram may correspond to a video. Depending on the association relationship, a to-be-played video at the next level that is associated with the target video is determined and preloaded. When a button corresponding to the to-be-played video pops up on the display interface, the to-be-played video to be jumped may be determined based on a triggering operation of the button. Meanwhile, the to-be-played video to be jumped may be taken as the target video, and continuously, determining the to-be-played video associated with the target video based on the association relationship, and the multimedia data is preloaded. The video may be played as smoothly as possible under the condition of ensuring minimum loading times.

According to the technical solution of the present disclosure, the interactive video is played in this way, so that the time for waiting the target video to be played can be shortened from 4-6 seconds to 1 second, thereby improving the watching experience of the user.

According to the technical solution of the embodiment of the present disclosure, upon detecting that the plurality of video streams in the current display page includes the target video, issuing the resource configuration information corresponding to the target video, and then determining the to-be-played video associated with the target video based on the resource configuration information, and preloading the to-be-played video, so that when the to-be-played video is detected, it can be played directly, and a situation that the user exits the video playing interface since the user needs to wait for a long video loading time and a low video conversion efficiency is further caused is avoided. Because the to-be-played video is preloaded in advance according to the association relationship in the resource configuration information, when the user triggers to play the to-be-played video, the user needs to wait for a short time, which improves the video playing efficiency and further improves the video conversion rate.

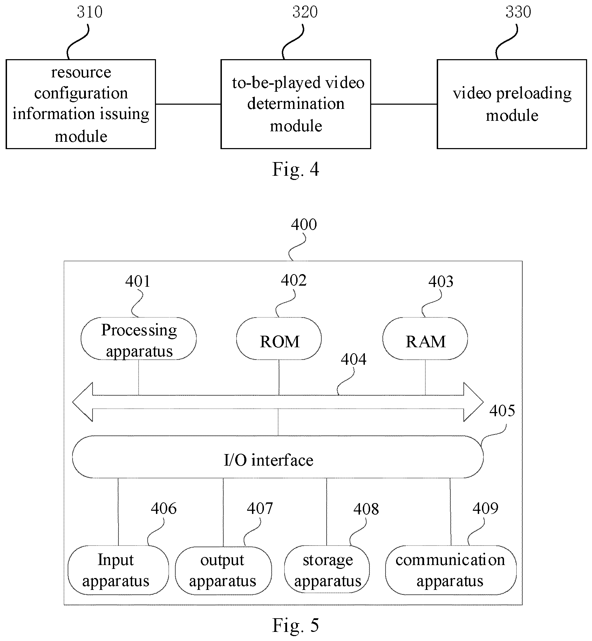

Fig. 4 is a structural schematic diagram of a video processing apparatus provided by an embodiment of the present disclosure, which can perform the video processing method provided by any embodiment of the present disclosure, and has corresponding functional modules for performing the method and beneficial effects. As shown in Fig. 4, the apparatus includes: a resource configuration information issuing module 310, a to-be-played video determination module 320 and a video preloading module 330.

The resource configuration information issuing module 310 is configured to issue resource configuration information associated with a target video upon detecting that a video stream includes the target video, wherein the resource configuration information includes multimedia data corresponding to the target video and an association relationship between the target video and at least one to-be-played video associated with the target video. The to-be-played video determination module 320 is configured to jump to a video playback page corresponding to the target video upon detecting that the playback of the target video is triggered, and determine, according to the association relationship, at least one to-be-played video associated with the target video. The video preloading module 330 is configured to load multimedia data of the at least one to-be-played video, and update, according to a triggering operation on the at least one to-be-played video, the target video displayed on the video playback page.

On the basis of the above technical solution, the resource configuration information issuing module is further configured to:
issue the resource configuration information associated with the target video upon detecting that the video stream displayed on a current display page includes the target video; and/or, issue the resource configuration information associated with the target video upon detecting that a to-be-displayed video stream includes the target video.

On the basis of the above technical solution, the to-be-played video determination module is further configured to: jump to a video playback page playing multimedia data stream corresponding to the target video upon detecting that a control corresponding to playing the target video is triggered, so as to play the target video on the video playback page.

On the basis of the above technical solution, the to-be-played video determination module is further configured to: determine, according to the association relationship, at least one to-be-played video at a next level that is associated with the target video as the at least one to-be-played video.

On the basis of the above technical solution, the video loading determination module is further configured to: preload the multimedia data of the at least one to-be-played video when the loading of the target video is completed; or, load the multimedia data of the target video and the multimedia data of the at least one to-be-played video in parallel upon detecting that a loading progress bar of the target video reaches a preset progress bar threshold.

On the basis of the above technical solution, the video loading determination module is further configured to: load multimedia data of at least one to-be-played video clip or a preset number of frames in the at least one to-be-played video.

On the basis of the above technical solution, the video loading determination module is further configured to: display, on the video playback page, a video jumping control corresponding to the at least one to-be-played video, and determine, according to a triggering operation on the video jumping control, a target to-be-played video from the at least one to-be-played video; and
update the target video on the video playback page based on the target to-be-played video, repeatedly determine, according to the association relationship, at least one to-be-played video associated with the target video, and load the multimedia data of the at least one to-be-played video.

According to the technical solution of the embodiment of the present disclosure, upon detecting that the plurality of video streams in the current display page includes the target video, issuing the resource configuration information corresponding to the target video, and then determining the to-be-played video associated with the target video based on the resource configuration information, and preloading the to-be-played video, so that when the to-be-played video is detected, it can be played directly, and a situation that the user exits the video playing interface since the user needs to wait for a long video loading time and a low video conversion efficiency is further caused can be avoided. Because the to-be-played video is preloaded in advance according to the association relationship in the resource configuration information, when the user triggers to play the to-be-played video, the user needs to wait for a long time, which improves the video playing efficiency and further improves the video conversion rate.

Fig. 5 is a structural schematic diagram of an electronic device provided by an embodiment of the present disclosure. Reference is now made to Fig. 5, which shows a structural schematic diagram of an electronic device (for example, a terminal device or a server in Fig. 5) 400 suitable for implementing an embodiment of the present disclosure. The terminal devices in the embodiments of the present disclosure may include, but not limited to, mobile terminals such as a mobile phone, a notebook computer, a digital broadcast receiver, a personal digital assistant (PDA), a tablet computer (PAD), a portable multimedia player (PMP), a vehicle-mounted terminal (for example, a vehicle-mounted navigation terminal) and the like, and fixed terminals such as a digital TV, a desktop computer and the like. The electronic device shown in Fig. 5 is only an example, and should not bring any limitation to the functions and application scope of the embodiments of the present disclosure.

As shown in Fig. 5, the electronic device 400 may include a processing apparatus (for example, a central processing unit, a graphics processing unit, etc.) 401, which may perform various appropriate actions and processes according to programs stored in a read-only memory (ROM) 402 or programs loaded from a storage apparatus 408 into a random access memory (RAM) 403. In the RAM 403, various programs and data required for operations of the electronic device 400 are also stored. The processing apparatus 401, the ROM 402 and the RAM 403 are connected to each other through a bus 404. An input/output (I/O) interface 405 is also connected to the bus 404.

Generally, the following apparatuses may be connected to the I/O interface 405: an input apparatus 406 including, for example, a touch screen, a touch pad, a keyboard, a mouse, a camera, a microphone, an accelerometer, a gyroscope, etc.; an output apparatus 407 including, for example, a liquid crystal display (LCD), a speaker, a vibrator, etc.; a storage apparatus 408 including, for example, a magnetic tape, a hard disk, etc.; and a communication apparatus 409. The communication apparatus 409 may allow the electronic device 400 to perform wireless or wired communication with other devices to exchange data. While the electronic device 400 with various apparatuses is shown in Fig. 5, it should be understood that it is not required to implement or have all the apparatuses shown. More or fewer apparatuses may alternatively be implemented or provided.

According to the embodiments of the present disclosure, processes described above with reference to the flowchart may be implemented as a computer software program. For example, an embodiment of the present disclosure includes a computer program product, which includes a computer program carried on a non-transitory computer-readable medium, the computer program including program codes for performing the method shown in the flowchart. In such an embodiment, the computer program may be downloaded and installed from a network through the communication apparatus 409, or installed from the storage apparatus 408, or installed from the ROM 402. When the computer program is executed by the processing apparatus 401, the above functions defined in the method of the embodiment of the present disclosure are performed.

The names of messages or information exchanged between apparatuses in the embodiments of the present disclosure are for illustrative purposes only, and are not intended to limit the scope of the messages or information.

The electronic device provided by the embodiment of the present disclosure belongs to the same disclosed concept as the video processing method provided by the embodiment above, technical details that are not described in detail in the present embodiment can be referred to the embodiments above, and the present embodiment has the same advantageous effects as the embodiments above.

An embodiment of the present disclosure provides a computer storage medium having stored thereon a computer program, which, when executed by a processor, implement the video processing method provided in the embodiment above.

It should be noted that the computer-readable medium mentioned above in the present disclosure may be a computer-readable signal medium or a computer-readable storage medium or any combination of both. The computer-readable storage medium may be, for example, but not limited to, an electrical, magnetic, optical, electromagnetic, infrared, or semiconductor system, apparatus or device, or a combination of any of the above. More specific examples of the computer-readable storage medium may include, but not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program, which program may be used by or in combination with an instruction execution system, apparatus or device. In the present disclosure, the computer-readable signal medium may include a data signal propagated in a baseband or as part of a carrier wave, in which computer-readable program codes are carried. This propagated data signal may take multiple forms, including but not limited to electromagnetic signals, optical signals or any suitable combination of the above. The computer-readable signal medium may also be any computer-readable medium other than the computer-readable storage medium, and may send, propagate or transmit a program used by or in combination with an instruction execution system, apparatus or device. The program codes contained in the computer-readable medium may be transmitted by any suitable medium, including but not limited to: electric wires, optical cables, radio frequency (RF) and the like, or any suitable combination of the above.

In some implementations, the client and the server can communicate by using any currently known or future developed network protocol such as a hypertext transfer protocol (HTTP), and may be interconnected with digital data communication in any form or medium (for example, a communication network). Examples of the communication network include a local area network ("LAN"), a wide area network ("WAN"), the Internet work (for example, the Internet) and an end-to-end network (for example, an ad hoc end-to-end network), as well as any currently known or future developed networks.

The computer-readable medium described above may be included in the electronic device; or it may exist alone without being assembled into the electronic device.

The computer-readable medium carries one or more programs which, when executed by the electronic device, cause the electronic device to:
issue resource configuration information associated with a target video upon detecting that a video stream includes the target video, wherein the resource configuration information includes multimedia data corresponding to the target video and an association relationship between the target video and at least one to-be-played video associated with the target video;
jump to a video playback page corresponding to the target video upon detecting that the playback of the target video is triggered, and determine, according to the association relationship, at least one to-be-played video associated with the target video;
   and
load multimedia data of the at least one to-be-played video, and update, according to a triggering operation on the at least one to-be-played video, the target video displayed on the video playback page.

Computer program codes for performing the operations of the present disclosure may be written in one or more programming languages or combinations thereof, including but not limited to obj ect-oriented programming languages such as Java, Smalltalk and C++, and conventional procedural programming languages such as "C" or similar programming languages. The program codes may be completely executed on a user computer, partially executed on the user computer, executed as an independent software package, partially executed on the user computer and partially executed on a remote computer, or completely executed on the remote computer or a server. In the case involving the remote computer, the remote computer may be connected to the user computer through any type of network, including a local area network (LAN) or a wide area network (WAN), or may be connected to an external computer (for example, through the Internet using an Internet service provider).

The flowchart and block diagrams in the drawings illustrate architectures, functions and operations of possible implementations of the systems, methods and the computer program product according to various embodiments of the present disclosure. In this regard, each block in the flowchart or block diagram may represent a part of a module, a program segment, or codes, which includes one or more executable instructions for implementing specified logical functions. It is also noted that, in some alternative implementations, the functions noted in the block may occur out of the order noted in the figures. For example, two blocks shown in succession may, in fact, be executed substantially in parallel, and may sometimes be executed in the reverse order, depending on the functions involved. It is also noted that each block in the block diagrams and/or flowcharts, and combinations of blocks in the block diagrams and/or flow diagrams, may be implemented by a dedicated hardware-based system that performs specified functions or operations, or by a combination of dedicated hardware and computer instructions.

The units involved in the embodiments described in the present disclosure may be implemented by software or hardware. The name of the unit does not constitute a limitation on the unit itself in some cases. For example, a first acquisition unit can also be described as "a unit that acquires at least two Internet protocol addresses".

The functions described above herein may be at least partially performed by one or more hardware logic components. For example, without limitation, exemplary types of hardware logic components that may be used include: a field programmable gate array (FPGA), an application-specific integrated circuit (ASIC), an application specific standard product (ASSP), a system-on-chip (SOC), a complex programmable logic device (CPLD) and the like.

In the context of the present disclosure, the machine-readable medium may be a tangible medium that may include or store a program used by or in connection with an instruction execution system, apparatus or device. The machine-readable medium may be a machine-readable signal medium or a machine-readable storage medium. The machine-readable medium may include, but not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

According to one or more embodiments of the present disclosure, Example 1 provides a video processing method, including:
issuing resource configuration information associated with a target video in response to detecting that a video stream includes the target video, wherein the resource configuration information includes multimedia data corresponding to the target video and an association relationship between the target video and at least one to-be-played video associated with the target video;
jumping to a video playback page corresponding to the target video in response to detecting that the target video is triggered to play, and determining, according to the association relationship, the at least one to-be-played video associated with the target video; and
loading multimedia data of the at least one to-be-played video, and updating, according to a triggering operation on the at least one to-be-played video, the target video displayed on the video playback page.

According to one or more embodiments of the present disclosure, Example 2 provides a video processing method, including:

For example, the issuing resource configuration information associated with a target video in response to detecting that a video stream includes the target video, includes:
issuing the resource configuration information associated with the target video in response to detecting that a video stream displayed on a current display page includes the target video; and/or
issuing the resource configuration information associated with the target video in response to detecting that a to-be-displayed video stream includes the target video.

According to one or more embodiments of the present disclosure, Example 3 provides a video processing method, including:

For example, the jumping to a video playback page corresponding to the target video in response to detecting that the target video is triggered to play, includes:
jumping to a video playback page displaying multimedia data stream corresponding to the target video in response to detecting that a control corresponding to playing the target video is triggered, so as to play the target video on the video playback page.

According to one or more embodiments of the present disclosure, Example 4 provides a video processing method, including:

For example, the determining, according to the association relationship, the at least one to-be-played video associated with the target video, includes:
determining, according to the association relationship, at least one to-be-played video at a next level that is associated with the target video.

According to one or more embodiments of the present disclosure, Example 5 provides a video processing method, including:

For example, the loading multimedia data of the at least one to-be-played video, includes:
preloading the multimedia data of the at least one to-be-played video in response to determining that a loading of the target video is completed; or,
loading the multimedia data of the target video and the multimedia data of the at least one to-be-played video in parallel in response to detecting that a loading progress bar of the target video reaches a preset progress bar threshold.

According to one or more embodiments of the present disclosure, Example 6 provides a video processing method, including:

For example, the loading multimedia data of the at least one to-be-played video, includes:
loading multimedia data of at least one to-be-played video clip or multimedia data of a preset number of frames in the at least one to-be-played video.

According to one or more embodiments of the present disclosure, Example 7 provides a video processing method, including:

For example, the updating, according to a triggering operation on the at least one to-be-played video, the target video displayed on the video playback page, includes:
displaying, on the video playback page, a video jumping control corresponding to the at least one to-be-played video, and determining, according to a triggering operation on the video jumping control, a target to-be-played video from the at least one to-be-played video; and
updating the target video on the video playback page based on the target to-be-played video, and repeatedly determining, according to the association relationship, at least one to-be-played video associated with the target video, and loading the multimedia data of the at least one to-be-played video.

Furthermore, although various operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments individually or in any suitable sub-combination.

## Claims

1. A video processing method, comprising:
issuing resource configuration information associated with a target video in response to detecting that a video stream comprises the target video, wherein the resource configuration information comprises multimedia data corresponding to the target video and an association relationship between the target video and at least one to-be-played video associated with the target video;
jumping to a video playback page corresponding to the target video in response to detecting that the target video is triggered to play, and determining, according to the association relationship, the at least one to-be-played video associated with the target video; and
loading multimedia data of the at least one to-be-played video, and updating, according to a triggering operation on the at least one to-be-played video, the target video displayed on the video playback page.

2. The method according to claim 1, wherein the issuing resource configuration information associated with a target video in response to detecting that a video stream comprises the target video comprises at least one of:
issuing the resource configuration information associated with the target video in response to detecting that a video stream displayed on a current display page comprises the target video; and
issuing the resource configuration information associated with the target video in response to detecting that a to-be-displayed video stream comprises the target video.

3. The method according to claim 1, wherein the jumping to a video playback page corresponding to the target video in response to detecting that the target video is triggered to play, comprises:
jumping to a video playback page displaying multimedia data stream corresponding to the target video in response to detecting that a control corresponding to playing the target video is triggered, so as to play the target video on the video playback page.

4. The method according to claim 1, wherein the determining, according to the association relationship, the at least one to-be-played video associated with the target video, comprises:
determining, according to the association relationship, at least one to-be-played video at a next level that is associated with the target video.

5. The method according to claim 1, wherein the loading multimedia data of the at least one to-be-played video, comprises:
preloading the multimedia data of the at least one to-be-played video in response to determining that a loading of the target video is completed; or,
loading the multimedia data of the at least one to-be-played video and the target video in parallel in response to detecting that a loading progress bar of the target video reaches a preset progress bar threshold.

6. The method according to claim 1, wherein the loading multimedia data of the at least one to-be-played video, comprises:
loading multimedia data of at least one to-be-played video clip or a preset number of frames in the at least one to-be-played video.

7. The method according to claim 1, wherein the updating, according to a triggering operation on the at least one to-be-played video, the target video displayed on the video playback page, comprises:
displaying, on the video playback page, a video jumping control corresponding to the at least one to-be-played video, and determining, according to a triggering operation on the video jumping control, a target to-be-played video from the at least one to-be-played video; and
updating the target video on the video playback page based on the target to-be-played video, and repeatedly determining, according to the association relationship, at least one to-be-played video associated with the target video, and loading multimedia data of the at least one to-be-played video.

8. A video processing apparatus, comprising:
a resource configuration information issuing module, configured to issue resource configuration information associated with a target video in response to detecting that a video stream comprises the target video, wherein the resource configuration information comprises multimedia data corresponding to the target video and an association relationship between the target video and at least one to-be-played video associated with the target video;
a to-be-played video determination module, configured to jump to a video playback page corresponding to the target video in response to detecting that the target video is triggered to play, and determine, according to the association relationship, the at least one to-be-played video associated with the target video; and
a video preloading module, configured to load multimedia data of the at least one to-be-played video, and update, according to a triggering operation on the at least one to-be-played video, the target video displayed on the video playback page.

9. An electronic device, comprising:
one or more processors; and
a storage apparatus configured to store one or more programs,
the one or more programs, when executed by the one or more processors, causing the one or more processors to implement the video processing method according to any one of claims 1 to 7.

10. A storage medium comprising computer-executable instructions which, when executed by a computer processor, configured to perform the video processing method according to any one of claims 1 to 7.
